# EUROPÄISCHE PATENTSCHRIFT

(11) **EP 1 394 083 B1**
(45) Veröffentlichungstag und Bekanntmachung des Hinweises auf die Patenterteilung: **24.05.2006**
(21) Anmeldenummer: 03018828.8
(22) Anmeldetag: 19.08.2003
(51) Int. Cl.: B65G 47/26, B65G 13/06

(54) **Tranportvorrichtung zum Transport von Werkstücken**
Device for the transportation of articles
Dispositif de transport d'objets

(30) Priorität: 30.08.2002 DE 10240794
(43) Veröffentlichungstag der Anmeldung: 03.03.2004
(73) Patentinhaber: Grob-Werke Burkhart Grob e.K., 87719 Mindelheim (DE)
(72) Erfinder: Groitl, Werner, 87778 Stetten (DE)
(74) Vertreter: Pfister, Stefan Helmut Ulrich

(56) Entgegenhaltungen:
- EP-A- 0 199 045
- FR-A- 2 540 841
- GB-A- 2 286 572
- US-A- 3 513 960
- US-A- 3 667 589

## Beschreibung

Die Erfindung betrifft eine Transportvorrichtung zum Transport von Werkstücken, nach dem Obergriff des Anspruchs 1.

Für den Transport von Werkstücken, zum Beispiel in Transferstraßen beziehungsweise Fertigungsstraßen, sind Transportvorrichtungen vorgesehen. Die Werkstücke werden dabei in Richtung der Fertigungsfolge auf einer Antriebsbahn, die beispielsweise als Rollenbahn ausgebildet ist, transportiert. Die Antriebsbahn ist dabei in Sektionen unterteilt, um sektionsweise den Vorschub der Werkstücke beeinflussen zu können. Ist die Antriebsbahn beispielsweise als Rollenbahn ausgebildet, werden die Rollen beziehungsweise gleichzeitig mehrere Rollen in einer Sektion durch entsprechende Antriebe angetrieben. Dazu ist eine Vielzahl von Getriebemotoren vorgesehen. Diese können zu- und abgeschaltet werden. Ziel ist es dabei oftmals, ein in einer Sektion befindliches Werkstück bewußt steuern zu können, wodurch sich eine sehr große Anzahl von Getriebemotoren ergibt, wenn zum Beispiel kleine Werkstücke transportiert werden. Dies kann zu Platzproblemen führen, da die Antriebe aufgrund ihrer Vielzahl dann gegebenenfalls beidseitig neben der Rollenbahn anzuordnen sind. Dadurch wird auch die Zugänglichkeit am Band selbst behindert. Diese Behinderungen der Zugänglichkeit sind insbesondere beim Einsetzen und Herausnehmen von Werkstücken sehr störend. Auch ist der Bauraum für die notwendigen Führungen für das Werkstück und Halterungen mit eventuell vorzug sehender Sensorik enorm eingeschränkt. Es entsteht auch insgesamt ein sehr hoher technischer Aufwand durch die große Anzahl der Getriebemotoren, ihrer Verkabelung und Ansteuerung.

Bei der Lösung nach der Druckschrift DE 40 02 414 A ist die Transportvorrichtung in unterschiedliche Sektionen eingeteilt. Die Fertigungsstraße weist dabei eine Förderstrecke auf, auf der Werkstücke beispielsweise auf Werkstückträgern aufgespannte Werkstücke mit gleicher Geschwindigkeit von einer Fertigungsstation und einem Fertigungsbereich zum anderen transportiert wird.

Die Lösung nach der Druckschrift DE 40 02 414 A1 schlägt vor, der Fertigungsstation bzw. mehreren Fertigungsstationen der Fertigungsstraße einen Zusatzförderer zuzuordnen. Dieser Zusatzförderer weist eine andere Bauform auf wie die eigentliche Förderstrecke. Er verbindet die mit Abstand aufeinander folgenden Fertigungsstationen des Fertigungsbereichs und erstreckt sich darüber hinaus über eine in Förderrichtung gesehen vor der ersten Fertigungsstation angeordnete Einlaufstrecke und eine sich an die letzte Fertigungsstation anschließende Ausschubstrecke. Der Zusatzförderer verfügt im wesentlichen nur über ein längliches, in Förderrichtung hin- und herbewegbares Zugorgan. Als Tragorgan für den Zusatzförderer dient die über dem Bereich desselben weiterhin durchgehende Förderstrecke, nämlich die Friktionsrollenbahn, die in diesem Bereich nicht angetrieben ist. In diesem Bereich der Förderstrecke übernimmt das Zugorgan des Zusatzförderers den Antrieb für diese Teile. Für diesen Zusatzförderer, der beispielsweise aus Werkstücken bzw. Werkstückträgern in mehreren Sektionen antreiben kann, ist eine fest angeordnete Antriebseinheit vorgesehen, die die Schubstange über ein Ritzel antreibt. Die Zugstange greift über Kupplungen, die klauenartig ausgebildet sind, in die Werkstückträger und treibt dadurch diese für die Bewegung auf der Förderstrecke an. Das Dokument US-A-3 667 599 offenbart eine Transportvorrichtung zum Transport von werkstücken gemäß dem Oberbegriff des Anspruchs 1.

Ausgehend von dem zuvor beschriebenen Stand der Technik, hat es sich die Erfindung zur Aufgabe gemacht, eine Transportvorrichtung vorzusehen, deren Aufwand für das entsprechende Transportsystem deutlich reduziert ist, sowie die Flexibilität der gesamten Transporteinrichtung weiterzuerhöhen.

Erfindungsgemäß wird diese Aufgabe durch eine Transportvorrichtung zum Transport von Werkstücken, zum Beispiel in einer Fertigungsstraße, gelöst, wobei die Transportvorrichtung zumindest aus einer in mehrere Sektionen unterteilten Antriebsbahn besteht und jede Sektion unabhängig von anderen Sektionen Werkstücke zu transportieren vermag, welches sich dadurch auszeichnet, daß mindestens ein Zentralantrieb vorgesehen ist, der über eine Kupplung die Sektion für einen Transport der Werkstücke antreibt wobei mindestens eine der Kupplungen zubeziehungsweise abschaltbar ausgebildet ist. Erfindungsgemäß wird also vorgeschlagen, anstelle der großen Anzahl von Getriebemotoren viele Kupplungen vorzusehen. Die Kupplungen sind in ihrem Fertigungsaufwand deutlich geringer. Sie benötigen außerdem weniger Platz und insbesondere ist der Aufwand für die Verkabelungen beziehungsweise Ansteuerungen deutlich verringert. Es wird erfindungsgemäß demnach nur noch ein Antriebsmotor für mehrere Zonen benötigt. Damit wird der Aufwand von der elektrischen Seite erheblich verringert. Die Kupplungen sind auch in ihrer Baugröße erheblich geringer als die bisher üblichen Getriebemotoren, so daß damit auch die Zugänglichkeit der Transportvorrichtung insbesondere zum Bestücken beziehungsweise zur Entnahme von Werkstücken wesentlich verbessert wird.

Im Vergleich mit der Lösung nach der Druckschrift DE 40 02 414 A1 benötigt diese wenigstens zwei unterschiedliche Antriebe, nämlich einen für den Antrieb der Transportbahn z. B. einen Wellenantrieb und einen zweiten für den Antrieb des Zusatzförderers, welcher die Werkstücke bzw. Werkstückträger über eine Zugstange mittels klauenartig ausgebildeter Kupplungen dann antreibt, wenn die Kupplungen in Eingriff mit den Werkstücken bzw. Werkstückträgern gebracht werden. Es wird daher eine Vielzahl von Antrieben benötigt, nämlich mindestens einer pro Bearbeitungsstation. Diese Lösung ist sehr aufwändig. Sie ermöglicht außerdem nicht den Werkstücktransport mit unterschiedlichen Geschwindigkeiten auf den einzelnen Sektionen, da alle Kupplungen über die gleiche Zugstange bzw. Schubstange die Werkstückträger bzw. Werkstücke antreiben. Der Aufwand für die Ausstattung der Transportbahn mit einem Zusatzförderer, wie nach der Druckschrift DE 40 02 414 A1 beschrieben, ist beträchtlich und die Kupplungen, welche klauenartig ausgebildet sind, sind außerdem sehr störanfällig und benötigen einen hohen Wartungsaufwand aufgrund eines hohen Verschleißes, der beim Eingriff der Kupplungen in die Werkstückträger zu verzeichnen ist.

Die erfindungsgemäße Anordnung reduziert die Anzahl unterschiedlicher Bauteile extrem. Die Fördereinrichtung innerhalb der Sektion wie auch die Zuförderstrecken sind grundsätzlich gleichartig ausbildbar. Dadurch gelingt es, daß ein Zentralantrieb prinzipiell die gesamte Transportvorrichtung antreibt und die Werkstücke in unterschiedlichen Sektionen zu unterschiedlichen Zeitpunkten mit unterschiedlichen Geschwindigkeiten bewegt.

Dadurch wird die Flexibilität der gesamten Transportvorrichtung insgesamt weiter erhöht, da auch innerhalb eines bestimmten Bereiches beziehungsweise einer Sektion zu-Bereiches beziehungsweise einer Sektion zu- beziehungsweise ausgekuppelt werden kann.

In einer bevorzugten Ausgestaltung der Erfindung ist vorgesehen, daß die Antriebsbahn mindestens einer ersten Sektion im wesentlichen gleichartig ausgebildet ist, wie die Antriebsbahn einer zweiten Sektion und/oder die die Sektion verbindende Antriebsbahn im wesentlichen gleichartig mit der Antriebsbahn in der Sektion ist. Durch diese erfindungsgemäße Weiterentwicklung wird erreicht, daß der Aufwand für das Transportsystem deutlich reduziert wird, da eine hohe Anzahl von standartisierten Teilen verwendbar ist. Der erfindungsgemäße Gedanke ist aber nicht nur auf diese Variante begrenzt, es können auch ähnlich wirkende Transportkonzepte im Sinne der Erfindung miteinander verbunden werden.

Entsprechend einer vorteilhaften Weiterbildung der Erfindung ist es vorgesehen, daß die Sektion oder die Antriebsbahn bzw. die Antriebsbahnen der Sektion als Rollenbahn ausgebildet ist. Die einzelnen Rollen der Rollenbahn sind dabei über Kupplungen mit dem Zentralantrieb verbunden, wodurch ein abschnittsweiser oder sektionsweiser Transport von Werkstücken ermöglicht ist. Auch wenn nachfolgend von einer angetriebenen Sektion gesprochen wird, wird darunter die Antriebsbahn der jeweiligen Sektion verstanden.

Entsprechend einer vorteilhaften Weiterbildung der Erfindung ist es vorgesehen, daß zwei Zentralantriebe vorgesehen sind, die beidseitig der Antriebsbahn angeordnet sind. Durch diese Lösung gelingt es, konstruktiv eine hohe Anzahl von Kupplungen entlang der gesamten Antriebsbahn anzuordnen, wodurch die Flexibilität der Transportvorrichtung insgesamt wesentlich erhöht wird. Man kann aufgrund dieser Lösung wesentlich mehr Sektionen beziehungsweise Rollen unterschiedlichst ansteuern.

Ein weiterer Aspekt der Erfindung ist dadurch angegeben, daß eine durchgehende Antriebswelle oder mehrere jeweils mehrere Sektionen antreibende Antriebswellen den Zentralantrieb bilden. Diese Lösung ist in soweit sehr vorteilhaft, da anhand einer einzigen auf einer Seite angeordneten antreibenden Antriebswelle eine Vielzahl von Kupplungen entlang der Antriebsbahn anordenbar ist. Um die Gesamtlänge der durchgehenden Antriebswelle aufgrund der Größe der Fertigungslinien insgesamt nicht zu lang zu gestalten, ist es vorgesehen, daß mehrere Antriebswellen vorgesehen sind, die jeweils mehrere Sektionen dann antreiben.

Erfindungsgemäß wurde auch gefunden, daß es von Vorteil ist, wenn die Kupplungen zur Ableitung beziehungsweise Übertragung des Drehmomentes von den Antriebswellen durch ein Stirnradgetriebe mit der beziehungsweise den Rollen der Rollenbahnen der jeweiligen Sektionen verbunden sind.

Es wurde auch gefunden, daß es von Vorteil ist, wenn Kettentriebe in der beziehungsweise den jeweiligen Sektionen vorgesehen sind, die das Drehmoment über Zahnräder und Ketten von der beziehungsweise den Kupplungen auf die Rollen der Rollenbahnen übertragen.

Von Vorteil ist es dabei, wenn die Rollen der Rollenbahn in den einzelnen Sektionen durch Kettentriebe untereinander schlupffrei beziehungsweise schlupfarm verbunden sind.

Eine weitere Ausbildung der erfindungsgemäßen Lösung sieht vor, daß mindestens eine der Sektionen zu- beziehungsweise abschaltbar ausgebildet ist.

Vorteilhafterweise ist eine weitere Ausbildung der Erfindung dadurch gekennzeichnet, daß mindestens eine der Rollen der Rollenbahn in der jeweiligen Sektion zu- beziehungsweise abschaltbar ausgestaltet ist.

Von besonderem Vorteil ist dabei, wenn die Kupplungen magnetisch, elektromagnetisch, mechanisch, pneumatisch und/oder hydraulisch angesteuert sind. Alle Formen der Ansteuerung der Kupplungen sind denkbar und je nach Einsatzzweck frei wählbar.

Es wurde auch gefunden, daß es von Vorteil ist, wenn die Größe der Kupplung an die Größe des Kettentriebes angepaßt ist. Damit läßt sich der Platzbedarf insgesamt weiter verringern, was zu einer weiteren Verbesserung der Zugänglichkeit der Transportvorrichtung zum Bestücken der Antriebsbahn mit Werkstücken beziehungsweise zur Entnahme von Werkstücken beiträgt.

Eine Weiterbildung der erfindungsgemäßen Transportvorrichtung zeichnet sich dadurch aus, daß mehrere Kupplungen innerhalb einer Sektion vorgesehen sind. Auch dies trägt zur Erhöhung der Flexibilität der gesamten Transportvorrichtung bei.

Gemäß einer Weiterbildung der erfindungsgemäßen Transportvorrichtung besteht die Kupplung aus einer feststehenden Kupplungsscheibe, einer longitudinal in Richtung der Antriebswelle beweglichen Kupplungsscheibe sowie dem Kupplungsgehäuse.

Erfindungsgemäß wurde gefunden, daß es von Vorteil ist, wenn seitliche Abdeckungen der Antriebsbahn vorgesehen sind und die Kupplungen in der bzw. den seitlichen Abdeckungen der Antriebsbahn angeordnet sind.

Dabei ist es weiterhin von Vorteil, wenn mehrere Kupplungen innerhalb einer Sektion vorgesehen sind.

Ein weiterer Aspekt der Erfindung ist dadurch angegeben, daß die Kupplungen aus einer feststehenden Kupplungsscheibe, einer longitudinal in Richtung der Antriebswelle beweglichen Kupplungsscheibe sowie aus dem Kupplungsgehäuse gebildet ist.

Es hat sich auch als vorteilhaft erwiesen, wenn für den Antrieb der Rollenbahn ein Stirnradgetriebe bestehend aus Stirnrad und Ritzel vorgesehen ist.

Die Erfindung betrifft auch eine Fertigungsstraße mit einer Transportvorrichtung gemäß einer oder mehrerer der zuvor beschriebenen Ausführungsformen.

Die Erfindung wird nachfolgend anhand von Ausführungsbeispielen und Zeichnungen weiter beschrieben. Es zeigen:
- Fig. 1: eine Draufsicht auf eine erfindungsgemäße Transportvorrichtung,
- Fig. 2: Kupplung mit drei untereinander gekoppelten Rollen einer Sektion beziehungsweise Antriebsbahn.

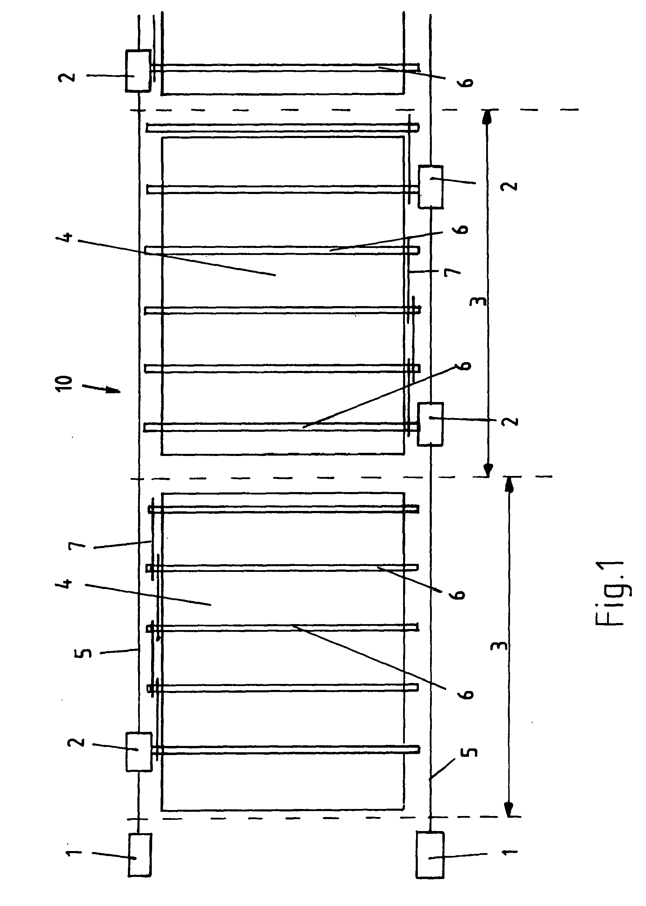

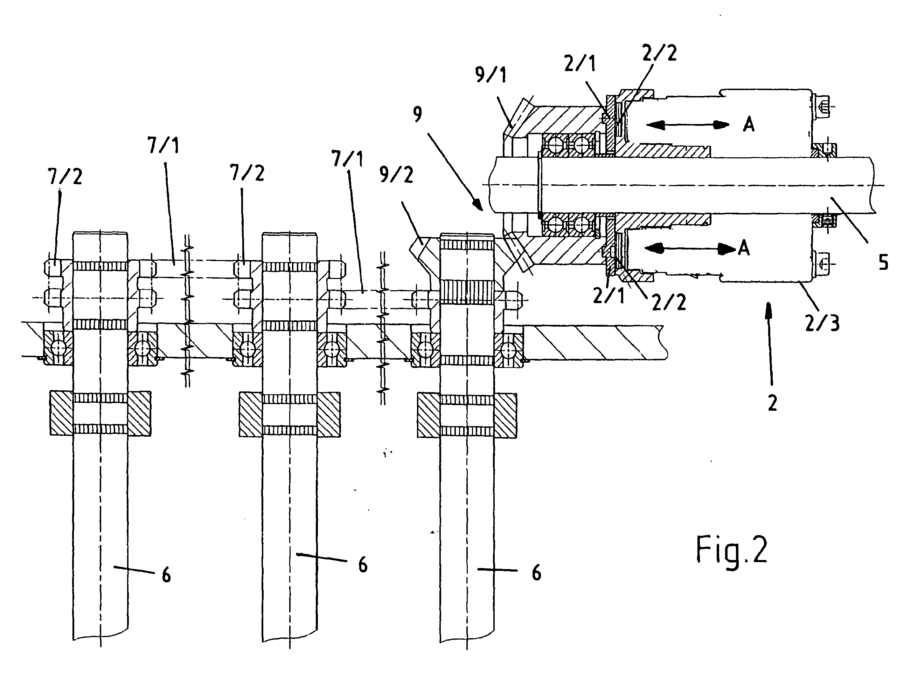

Fig. 1 zeigt eine Draufsicht auf eine als Rollenbahn ausgebildete Antriebsbahn 10 der erfindungsgemäßen Transportvorrichtung. Beidseitig der Antriebsbahn sind Zentralantriebe 1 angeordnet, die über eine Antriebswelle 5 die jeweiligen Sektionen 3 der als Rollenbahn ausgebildeten Antriebsbahn 10 antreiben. Mit dem Bezugszeichen 2 sind dabei die Kupplungen bezeichnet, die wechselseitig in dem Ausführungsbeispiel gemäß der Fig. 2 entlang der Antriebsbahn 10 angeordnet sind. Mit dem Bezugszeichen 3 sind dabei Sektionen der Rollenbahn bezeichnet, die abschnittsweise vom Zentralantrieb 1 über die Kupplung 2 ansteuerbar sind. Die Sektionen 3 sind mit gestrichelten Linien dabei lediglich schematisch dargestellt. Auf den Rollen 6 der Rollenbahn befinden sich dabei Werkstücke 4. Die Werkstücke 4 können dabei auch auf Paletten angeordnet sein, wenn dies entsprechend der Größe des jeweiligen Werkstückes zweckmäßig erscheint. Die einzelnen Rollen 6 der Rollenbahn sind dabei über Kettentriebe 7 untereinander verbunden. Im Verlauf der Antriebsbahn sind dabei in Transportrichtung Kupplungen 2 vorgesehen, die jeweils mehrere Rollen 6 einer Sektion gleichzeitig antreiben können. Innerhalb der Sektion 3, welche sich in der Darstellung rechts befindet, sind zwei Kupplungen 2 vorgesehen, die einen auch innerhalb der Sektion 3 abgestuften Weitertransport ermöglicht.

Selbstverständlich ist die gesamte Antriebsbahn 10 sowie deren Sektionen 3 derart ausgebildet, daß der Antrieb auch reversibel in die andere Richtung durchführbar ist.

Durch die Anordnung mindestens einer Kupplung 2 für jede Sektion 3 entlang der Antriebsbahn 10 ist es nunmehr möglich, den anlagentechnischen Aufwand für die erfindungsgemäße Transportvorrichtung wesentlich geringer zu halten, als dies mit den dafür bisher bekannten Getriebemotoren möglich war. Sehr gut ersichtlich ist auch, daß die Zugänglichkeit entlang der Antriebsbahn zum Bestücken mit Werkstücken 4 beziehungsweise zur Entnahme derselben, wesentlich verbessert ist. Kupplungen 2 sind in ihrer Baugröße derart angepaßt, daß sie in den seitlichen Abdeckungen entlang der Antriebsbahn unterzubringen sind, wodurch eine weitere Verbesserung der Antriebsbahn ermöglicht wird. Insbesondere sind dadurch die Kupplungen sowie die Kettentriebe 7 innerhalb der einzelnen Sektionen 3 gegen Beschädigung und gegen Verschmutzung beziehungsweise Benetzung mit Kühlmitteln geschützt. Die Abdeckungen, die beidseitig der Antriebsbahn anordenbar sind, sind zum besseren Verständnis der Erfindung in der Fig. 1 nicht eingezeichnet worden.

In Fig. 2 ist ein Detailausschnitt eines Teiles der Sektion 3 beziehungsweise der Antriebsbahn abgebildet. Dem Bezugszeichen 5 ist dabei wie in Fig. 1 die durchgehende Antriebswelle zugeordnet. Auf der Antriebswelle 5 ist dabei die Kupplung 2 angeordnet. Mit dem Bezugszeichen 2/1 ist die feststehende Kupplungsscheibe bezeichnet, mit dem Bezugszeichen 2/2 die bewegliche Kupplungsscheibe. Die bewegliche Kupplungsscheibe 2/2 ist dabei longitudinal entlang der Antriebswelle 5 beweglich, so daß sie in Richtung des Pfeiles A zum Ein- beziehungsweise Auskuppeln bewegbar ist. Die Details für die Ansteuerung der Kupplungsscheibe 2/2 sind dabei nicht dargestellt, da eine Vielzahl von technischen Möglichkeiten gegeben ist, die zum Einkuppeln der Kupplungsscheibe 2/2 eingesetzt werden können.

Dies sind beispielsweise mechanische, magnetische, elektromagnetische, hydraulische und/oder pneumatische Ansteuerungsmöglichkeiten.

Mit dem Bezugszeichen 2/3 ist das Kupplungsgehäuse bezeichnet. Die Kupplung 2 ist über ein Stirnradgetriebe 9 mit einer Rolle 6 der Rollenbahn verbunden. Dabei greift ein auf der Rolle 6 der Rollenbahn befindliches Ritzel 9/2 in das Stirnrad 9/1 der Kupplung ein. Im eingekuppelten Zustand wird damit das Drehmoment von der Antriebswelle 5 über die Kupplungsscheiben 2/1 und 2/2 und das Stirnradgetriebe 9 mit dem Stirnrad 9/1 und dem Ritzel 9/2 auf die Rolle 6 der Rollenbahn übertragen.

Über einen Kettentrieb 7, welcher aus der Kette 7/1 und dem Zahnrad 7/2 gebildet ist, wird das Drehmoment von der in der Fig. 2 rechten Rolle 6 der Rollenbahn auf die links neben dieser Rolle 6 angeordneten weiteren Rollen 6 der Rollenbahn beziehungsweise Antriebsbahn übertragen. Der Kettentrieb 7 ist dabei derart ausgebildet, daß eine schlupffreie beziehungsweise schlupfarme Übertragung des Drehmomentes ermöglicht wird. Anhand der Darstellung gemäß der Fig. 2 ist ersichtlich, daß die Übertragung des Drehmomentes von der Antriebswelle 5 über Kupplungen 2 und Kettentriebe 7 auf die Rollen 6 der Rollenbahn den Aufwand für derartige Antriebsbahnen beziehungsweise von Sektionen der Antriebsbahn erheblich verringert. Die Baugröße ist insgesamt wesentlich kleiner als dies beispielsweise mit Getriebemotoren möglich ist. Auch der anlagentechnische Aufwand zur Ansteuerung der Kupplungen ist erheblich geringer als der für den Antrieb von Getriebemotoren. Somit wird auch der anlagentechnische und steuerungstechnische Aufwand insgesamt erheblich verringert.

In der Zeichnung sind Transportvorrichtungen gezeigt, die eine durchgehende Antriebsrolle 6 aufweisen. Hierauf ist die Anmeldung aber nicht beschränkt, das erfindungsgemäße Konzept ist in gleicher Weise auch bei nur einseitig gelagerten, also frei rollenden Rollen, möglich. Diese Rollen befinden sich ihrerseits ebenfalls an einem entsprechenden Traggerüst und erlauben es, daß das Werkstück auf der Transportbahn zwischen den beiden Rädern hängend transportiert wird. Gegebenenfalls ist hierbei auch eine Rolle oder beide Rollen angetrieben. Dies führt zu der bevorzugten Ausgestaltung der Erfindung derart, daß die Antriebsbahn zwei längsverlaufende Gerüste aufweist, jedes Gerüst eine Rollenbahn besitzt und mindestens ein Gerüst eine antreibbare Rollenbahn trägt. Natürlich besitzt in dieser Variante der Erfindung jedes Gerüst eine eigenständige Rollenbahn, wobei die Achsen der Rollen gegebenenfalls parallel verlaufen, die Rollen aber keine gemeinsame Welle besitzen.

## Patentansprüche

1. Transportvorrichtung zum Transport von Werkstücken, zum Beispiel in einer Fertigungsstraße, wobei die Transportvorrichtung zumindest aus einer in mehrere Sektionen (3) unterteilten Antriebsbahn (10) besteht und die Antriebsbahn jeder Sektion unabhängig von anderen Sektionen Werkstücke (4) zu transportieren vermag, wobei mindestens ein Zentralantrieb (1) vorgesehen ist, der über eine Kupplung (2) die Antriebsbahn (10) der Sektion (3) für einen Transport der Werkstücke (4) antreibt, **dadurch gekennzeichnet, daß** mindestens eine der Kupplungen (2) zubeziehungsweise abschaltbar ausgebildet ist.

2. Transportvorrichtung nach Anspruch 1, **dadurch gekennzeichnet, daß** die Antriebsbahn mindestens einer ersten Sektion im Wesentlichen gleichartig ausgebildet ist wie die Antriebsbahn einer zweiten Sektion und/oder die die Sektionen verbindende Antriebsbahn im Wesentlichen gleichartig mit der Antriebsbahn in der Sektion ist.

3. Transportvorrichtung nach einem oder beiden der vorhergehenden Ansprüche, **dadurch gekennzeichnet, daß** eine durchgehende Antriebswelle (5) oder mehrere jeweils mehrere Sektionen (3) antreibende Antriebswellen (5) als Zentralantrieb (1) vorgesehen ist bzw. sind, der bzw. die über eine Kupplung die Sektion (3) für einen Transport der Werkstücke antreibt/en.

4. Transportvorrichtung nach einem oder mehreren der vorhergehenden Ansprüche, **dadurch gekennzeichnet, daß** die Antriebsbahn (10) als antreibbare Rollenbahn (6) ausgebildet ist.

5. Transportvorrichtung nach einem oder mehreren der vorhergehenden Ansprüche, **dadurch gekennzeichnet, daß** zwei Zentralantriebe (1) vorgesehen sind.

6. Transportvorrichtung nach einem oder mehreren der vorhergehenden Ansprüche, **dadurch gekennzeichnet, daß** die Zentralantriebe beidseitig der Antriebsbahn (10) angeordnet sind.

7. Transportvorrichtung nach einem oder mehreren der vorhergehenden Ansprüche, **dadurch gekennzeichnet, daß** wenigstens ein Stirnradgetriebe (9) vorgesehen ist und die Kupplungen (2) zur Ableitung beziehungsweise Übertragung des Drehmomentes durch das Stirnradgetriebe (9) mit der beziehungsweise den Rollen der Rollenbahnen (6) der jeweiligen Sektionen (3) verbunden sind.

8. Transportvorrichtung nach einem oder mehreren der vorhergehenden Ansprüche, **dadurch gekennzeichnet, daß** Kettenantriebe (7) in der beziehungsweise den jeweiligen Sektionen (3) vorgesehen sind, die das Drehmoment über Zahnräder (7/2) und Ketten (7/1) von der beziehungsweise den Kupplungen (2) auf die Rollen der Rollenbahnen (6) übertragen.

9. Transportvorrichtung nach einem oder mehreren der vorhergehenden Ansprüche, **dadurch gekennzeichnet, daß** die Rollen der Rollenbahn (6) in den einzelnen Sektionen (3) durch Kettentriebe (7) untereinander schlupffrei beziehungsweise schlupfarm verbunden sind.

10. Transportvorrichtung nach einem oder mehreren der vorhergehenden Ansprüche, **dadurch gekennzeichnet, daß** mindestens eine der Sektionen (3) zu- beziehungsweise abschaltbar ausgebildet ist und/oder die Sektionen unabhängig voneinander antreibbar sind.

11. Transportvorrichtung nach einem oder mehreren der vorhergehenden Ansprüche, **dadurch gekennzeichnet, daß** mindestens eine der Rollen der Rollenbahnen (6) in der jeweiligen Sektion (3) zu- beziehungsweise abschaltbar ausgestaltet ist.

12. Transportvorrichtung nach einem oder mehreren der vorhergehenden Ansprüche, **dadurch gekennzeichnet, daß** die Kupplungen (2) elektromagnetisch, mechanisch, pneumatisch und/oder hydraulisch angesteuert sind.

13. Transportvorrichtung nach einem oder mehreren der vorhergehenden Ansprüche, **dadurch gekennzeichnet, daß** die Größe der Kupplung (2) an die Größe des Kettentriebes (7) angepasst ist.

14. Transportvorrichtung nach einem oder mehreren der vorhergehenden Ansprüche, **dadurch gekennzeichnet, daß** die Kupplungen (2) in der beziehungsweise den seitlichen Abdeckungen (8) der Antriebsbahn (10) angeordnet sind und/oder mehrere Kupplungen (2) innerhalb einer Sektion (3) vorgesehen sind.

15. Transportvorrichtung nach einem oder mehreren der vorhergehenden Ansprüche, **dadurch gekennzeichnet, daß** die Kupplungen (2) aus einer feststehenden Kupplungsscheibe (2/1), einer longitudinal in Richtung der Antriebswelle (5) beweglichen Kupplungsscheibe (2/2) sowie dem Kupplungsgehäuse (2/3) gebildet ist.

16. Transportvorrichtung nach einem oder mehreren der vorhergehenden Ansprüche, **dadurch gekennzeichnet, daß** für den Antrieb der Rollenbahn (6) ein Stirnradgetriebe (9), bestehend aus Stirnrad (9/1) und Ritzel (9/2), vorgesehen ist.

17. Transportvorrichtung nach einem oder mehreren der vorhergehenden Ansprüche, **dadurch gekennzeichnet, daß** die Antriebsbahn (10) zwei längsverlaufende Gerüste aufweist, jedes Gerüst eine Rollenbahn (6) besitzt und/oder mindestens ein Gerüst eine antreibbare Rollenbahn (6) trägt.

18. Fertigungsstraße mit einer Transportvorrichtung gemäß einem oder mehreren der vorhergehenden Ansprüche.

## Claims

1. Conveying device for conveying work pieces, for example in a production line, the conveying device comprising at least one driving line (10) divided into several sections (3), and the driving line of each section being able, independently from other sections, to convey work pieces (4), at least one central drive (1) being provided which drives via a coupling (2) the driving line (10) of the section (3) for conveying of the work pieces (4), **characterised in that** at least one of the couplings (2) is designed in such a way that it can be connected, respectively disconnected.

2. Conveying device according to claim 1, **characterised in that** the driving line of at least a first section is designed essentially identically with the driving line of a second section, and/or the driving line connecting the sections is essentially identical with the driving line in the section.

3. Conveying device according to one or both of the preceding claims, **characterised in that** a continuous drive shaft (5) or several drive shafts (5) each driving several sections (3) is, respectively are, provided as central drive (1) which drive(s) via a coupling the section (3) for conveying the work pieces.

4. Conveying device according to one or more of the preceding claims, **characterised in that** the driving line (10) is designed as roller conveyor (6) which can be driven.

5. Conveying device according to one or more of the preceding claims, **characterised in that** two central drives (1) are provided.

6. Conveying device according to one or more of the preceding claims, **characterised in that** the central drives are arranged on both sides of the driving line (10).

7. Conveying device according to one or more of the preceding claims, **characterised in that** at least one spur gear (9) is provided, and the couplings (2), in order to derive, respectively transfer, the turning moment via the spur gear (9)are connected with roller(s) of the roller conveyor (6) of the respective sections (3).

8. Conveying device according to one or more of the preceding claims, **characterised in that** chain drives (7) are provided in the respective section(s) (3) which transfer the turning moment via toothed wheels (7/2) and chains (7/1) from the coupling(s) (2) to the rollers of the roller conveyor (6).

9. Conveying device according to one or more of the preceding claims, **characterised in that** the rollers of the roller conveyor (6) in the single sections (3) are connected to each other through chain drives (7) without slip or with little slip.

10. Conveying device according to one or more of the preceding claims, **characterised in that** at least one of the sections (3) is designed in such a way that it can be connected, respectively disconnected, and/or the sections can be driven independently from each other.

11. Conveying device according to one or more of the preceding claims, **characterised in that** at least one of the rollers of the roller conveyors (6) in the respective section (3) is designed in such a way that it can be connected, respectively disconnected.

12. Conveying device according to one or more of the preceding claims, **characterised in that** the couplings (2) are triggered electro-magnetically, mechanically, pneumatically, and/or hydraulically.

13. Conveying device according to one or more of the preceding claims, **characterised in that** the size of the coupling (2) is adapted to the size of the chain drive (7).

14. Conveying device according to one or more of the preceding claims, **characterised in that** the couplings (2) are provided in the lateral covering(s) (8) of the driving line (10), and/or several couplings (2) are provided within one section (3).

15. Conveying device according to one or more of the preceding claims, **characterised in that** the couplings (2) are formed by a stationary clutch disc (2/1), a clutch disc (2/2) which can move longitudinally in the direction of the drive shaft (5), as well as the coupling housing (2/3).

16. Conveying device according to one or more of the preceding claims, **characterised in that** for the drive of the driving line (6) a spur gear (9) comprising a spur wheel (9/1) and a pinion (9/2) is provided.

17. Conveying device according to one or more of the preceding claims, **characterised in that** the driving line (10) has two longitudinal frameworks, each framework has a roller conveyor (6), and/or at least one framework has a driven roller conveyor (6).

18. Production line with a conveying device according to one or more of the preceding claims.

## Revendications

1. Dispositif de transport destiné au déplacement de pièces à usiner, faisant par exemple partie d'une ligne de fabrication, consistant en au moins un convoyeur (10) subdivisé en plusieurs sections (3), chacune étant indépendamment capable de transporter des pièces à usiner (4) et en au moins une commande centrale (1) alimentant à l'aide d'un embrayage (2) le convoyeur (10) d'une section (3) pour le déplacement des pièces à usiner (4), **caractérisé en ce qu'**au moins un des embrayages (2) possède une configuration permettant de l'activer ou de le désactiver.

2. Dispositif de transport selon la revendication 1, **caractérisé en ce que** la configuration du convoyeur de la première section est, dans le principe, similaire au moins à celle d'une deuxième section et/ou **en ce que** les configurations des convoyeurs entre les sections sont, en principe, similaires à celles des sections même.

3. Dispositif de transport selon une ou deux des revendications précédentes, **caractérisé en ce que** la commande centrale (1), alimentant via un embrayage les sections (3) afin de déplacer les pièces à usiner, consiste soit en un arbre d'entraînement (5) traversant toutes les sections, soit en plusieurs arbres d'entraînement (5).

4. Dispositif de transport selon une ou plusieurs des revendications précédentes, **caractérisé en ce que** le convoyeur (10) est un convoyeur à rouleaux (6) commandé.

5. Dispositif de transport selon une ou plusieurs des revendications précédentes, **caractérisé en ce qu'**il existe deux commandes centrales (1).

6. Dispositif de transport selon une ou plusieurs des revendications précédentes, **caractérisé en ce que** les commandes centrales (1) sont situées des deux côtés du convoyeur (10).

7. Dispositif de transport selon une ou plusieurs des revendications précédentes, **caractérisé en ce qu'**il est prévu au moins un engrenage cylindrique à denture droite (9) et **en ce que** les embrayages (2) sont liés au(x) rouleau(x) du convoyeur (6) de chacune des sections (3) afin de leur transmettre le moment de rotation de cet engrenage.

8. Dispositif de transport selon une ou plusieurs des revendications précédentes, **caractérisé en ce que** des chaînes d'entraînement (7) sont situées dans la ou les sections (3) et transmettent le moment de rotation à l'aide de roues dentées (7/2) et de chaînes (7/1) du ou des embrayages (2) vers les rouleaux (6) du convoyeur.

9. Dispositif de transport selon une ou plusieurs des revendications précédentes, **caractérisé en ce que** les rouleaux (6) du convoyeur, situés dans une section commune, sont liés entre eux par des chaînes d'entraînement sans aucun jeu ou avec un jeu minimal.

10. Dispositif de transport selon une ou plusieurs des revendications précédentes, **caractérisé en ce qu'**au moins une section (3) possède une configuration permettant de l'activer ou de le désactiver et/ou **en ce que** chacune des sections peut être commandée indépendamment.

11. Dispositif de transport selon une ou plusieurs des revendications précédentes, **caractérisé en ce qu'**au moins un rouleau du convoyeur à rouleaux (6) d'une section (3) possède une configuration permettant de l'activer ou de le désactiver.

12. Dispositif de transport selon une ou plusieurs des revendications précédentes, **caractérisé en ce que** les embrayages (2) sont commandés par des moyens électromécaniques, mécaniques, pneumatiques et/ou hydrauliques.

13. Dispositif de transport selon une ou plusieurs des revendications précédentes, **caractérisé en ce que** la dimension de l'embrayage (2) est adaptée à celle de l'entraînement à chaînes (7).

14. Dispositif de transport selon une ou plusieurs des revendications précédentes, **caractérisé en ce que** les embrayages (2) sont situés à l'intérieur du ou des couvercles latéraux (8) du convoyeur (10) et/ou **en ce que** plusieurs embrayages (2) sont prévus pour une section (3).

15. Dispositif de transport selon une ou plusieurs des revendications précédentes, **caractérisé en ce que** les embrayages (2) consistent en un premier disque d'embrayage fixe (2/1), en un deuxième disque d'embrayage (2/2) mobile le long de l'arbre d'entraînement (5) et en un châssis d'embrayage (2/3).

16. Dispositif de transport selon une ou plusieurs des revendications précédentes, **caractérisé en ce que** le convoyeur à rouleaux (6) est commandé par un engrenage cylindrique à denture droite (9) consistant en une roue cylindrique dentée (9/1) et en un pignon (9/2).

17. Dispositif de transport selon une ou plusieurs des revendications précédentes, **caractérisé en ce que** le convoyeur (10) est muni de deux structures longitudinales comportant chacune un convoyeur à rouleaux (6) et/ou **en ce qu'**au moins une structure comporte un convoyeur à rouleaux (6) commandé.

18. Ligne de fabrication comportant un dispositif de transport selon une ou plusieurs des revendications précédentes.
